# EUROPÄISCHE PATENTANMELDUNG

(11) **EP 2 065 958 A1**
(43) Veröffentlichungstag der Anmeldung: **03.06.2009**
(21) Anmeldenummer: 07023030.5
(22) Anmeldetag: 28.11.2007
(51) Int. Cl.: H01M 8/02, H01M 8/10

(54) **Bipolarplatten für Stapel von Brennstoffzellen**

(71) Anmelder: H-TEC Wasserstoff-Energie-Systeme GmbH, 23558 Lübeck (DE)
(72) Erfinder: Höller, Stefan, 23552 Lübeck (DE); Küter, Uwe, 23560 Lübeck (DE)
(74) Vertreter: Vollmann, Heiko

(57) **Zusammenfassung**

Bipolarplatte bestehend aus einem leitenden Blech (10) und einem Rahmen (36) aus einem weichelastischem Material (38), das Dichtungen (42) aufweist. Das weichelastische Material ist zur mechanischen Stabilisierung mit Versteifungselementen (40) versehen. Stützkörper im Bereich der Dichtungen verhindern das Eindrücken der Elektrolytmembran in die fluidführenden Kanäle der Biplarplatte.

## Beschreibung

Die Erfindung betrifft eine Bipolarplatte für Stapel von Brennstoffzellen oder Elektrolyseuren gemäß den im Oberbegriff des Anspruchs 1 angegebenen Merkmalen.

In Brennstoffzellen wird ein Stoff verbrannt und die dabei entstehende Energie in elektrische Energie umgesetzt. Ein Beispiel stellt die Wasserstoffbrennstoffzelle dar, bei der Wasserstoff mit Sauerstoff zu Wasser verbrannt wird. Dabei werden die beiden Reaktanden Wasserstoff und Sauerstoff in zwei Elektroden eingeleitet, die an je eine Seite einer Elektrolytmembran angeordnet sind. Ganz ähnlich aufgebaut sind Elektrolyseure, bei denen die chemische Reaktion in umgekehrter Richtung erfolgt. Hier wird etwa Wasser durch Verwendung elektrischer Energie in Wasserstoff und Sauerstoff zerlegt.

Zur Erhöhung der Spannung und somit auch der Leistung, welche durch die Brennstoffzellen bereitgestellt werden soll, werden meist mehrere Brennstoffzellen zu einem Brennstoffzellenstapel verbunden. Dazu wird stets die Anode einer Zelle mit der Kathode der Nachbarzelle über eine so genannte Bipolarplatte leitend miteinander verbunden. Üblicherweise werden Bipolarplatten mit zwei profilierten Oberflächen gefertigt, wobei diese Oberflächenprofile als Strömungskanäle zur Zuleitung der Reaktandenfluide und Ableitung der Produktfluide ausgebildet sind. Hergestellt werden Bipolarplatten kostenintensiv aus Titan oder einer Kohlenstoff-Kunststoff-Mischung.

Zur kostengünstigen Herstellung ist man dazu übergegangen, nicht die gesamte Platte aus teuren Materialien herzustellen, sondern lediglich den elektrisch wirksamen Teil. Wie z.B. bekannt aus DE 197 15 256 C1 kann eine Bipolarplatte verkleinert ausgeführt und in einen Rahmen aus einem weiteren, kostengünstigeren Material eingebracht werden. In diesem Rahmenelement befinden sich typischerweise Aussparungen für die Montage in einen Brennstoffzellenstapel sowie für die Zu- und Ableitung von Reaktanden. DE 197 15 256 C1 beschreibt darüber hinaus ein Rahmenmaterial, welche hinreichend flexibel ist, sodass eine Dichtung sichergestellt werden soll. Hierbei tritt in der Praxis jedoch häufig das Problem auf, dass sich die Rahmenelemente von Bipolarplatten, die nach dem Stand der Technik hergestellt werden, beim Anpressen im Bereich der Dichtung gegeneinander verschieben oder nicht ausreichend dicht sind. Dies hat nachteilig eine aufwendige Produktion, eine herabgesetzte Dichtigkeit und eine Verringerung der Zuverlässigkeit zur Folge. Dies ist insbesondere für den Betrieb von Elektrolyseuren kritisch, da diese regelmäßig für hohe Systemdrücke ausgelegt werden. Darüber hinaus werden routinemäßig sehr hohe Anforderungen an die Reaktandenreinheit und daher an die Systemdichtigkeit gestellt. Dieses Problem ist insbesondere für Stapel aus einer Vielzahl von Brennstoffzellen bzw. Elektrolyseuren relevant, da sich die Verschiebungen in nachfolgenden Zellen bis zur Undichtigkeit addieren können. Der Vorteil dieses flexiblen Rahmenmaterials, der in der hohen Dichtigkeit einer einzelnen Bipolarplatte gegenüber der angrenzenden Membran-Katalysator-Platte begründet liegt, wirkt sich in Folge der Flexibilität des Materials allerdings in einem Stapel von Brennstoffzellen nachteilig aus.

Vor diesem Hintergrund liegt der Erfindung die Aufgabe zugrunde, eine Bipolarplatte zu erschaffen, die einerseits eine ausreichende mechanische Stabilität aufweist, andererseits hervorragende Dichteigenschaften besitzt und zudem kostengünstig herzustellen ist.

Diese Aufgabe wird durch eine Bipolarplatte mit den in Anspruch 1 angegebenen Merkmalen gelöst. Vorteilhafte Ausgestaltungen sind in den Unteransprüchen, der nachfolgenden Beschreibung und den Zeichnungen angegeben.

Die erfindungsgemäße Bipolarplatte ist für einen Stapel mit mindestens einer, vorzugsweise einer Vielzahl von Brennstoffzellen oder Elektrolyseurzellen der PEM-Bauart ausgelegt, und von einem Rahmen umgeben, der mindestens eine Dichtung bildet, wobei dieser Rahmen aus einem durch mindestens ein Versteifungselement verstärkten weichelastischen Werkstoff gebildet ist. Die durch den Rahmen gebildeten Dichtungen werden mittels des Versteifungselementes mechanisch stabilisiert, so dass sich diese beim Anpressen mehrerer Brennstoffzellen zu einem Stapel nicht mehr gegeneinander verschieben. Da der Rahmen selbst aus weichelastischem Material gefertigt ist, gewährleistet er gleichzeitig eine zuverlässige Abdichtung zu benachbarten Bauteilen.

Grundgedanke der erfindungsgemäßen Lösung ist somit einerseits der, zumindest den die Dichtung bildenden Teil des Rahmens aus einem weichelastischen Werkstoff zu fertigen und darüber hinaus ein Versteifungselement vorzusehen, welches dem Rahmen eine ausreichende Stabilität gibt, damit sich insbesondere im Bereich der Dichtungen keine Verschiebungen im Stapel ergeben, welche die Abdichtung beeinträchtigen könnten. Unter weichelastisch im Sinne der vorliegenden Erfindung ist eine solche Elastizität zu verstehen, welche geeignet ist, eine ausreichende Abdichtung im Bereich der Dichtung bzw. Dichtungen zum benachbarten Bauteil zu gewährleisten, im Gegensatz beispielsweise zu dem Versteifungselement, das zwar ebenfalls elastisch sein kann, aber im Gegensatz hierzu hartelastisch, wie beispielsweise Stahl, sodass die erforderliche Abstützung des Rahmens gewährleistet ist.

Die erfindungsgemäße Bipolarplatte ist vorteilhaft für Stapel mit mehreren Brennstoffzellen oder Elektrolyseurzellen der PEM-Bauart bestimmt, in denen sie einerseits zwischen benachbarten Membran-Elektrodeneinheiten sowie andererseits an den Enden des Stapels zur Reaktandenzu- oder Abfuhr sowie zur elektrischen Kontaktierung vorgesehen sind. Doch kann die erfindungsgemäße Bipolarplatte auch zu letzterem in Stapel mit nur einer Brennstoffzelle oder Elektrolyseurzelle der PEM-Bauart eingesetzt werden, als so genannte endständige Bipolarplatte.

Zur kostengünstigen und einfach zu realisierenden Herstellung kann das Versteifungselement vorteilhaft auf einer Seite des Rahmens angebracht werden. Auf diese Weise schließt die Dichtung auf der dem Versteifungselement abgewandten Seite in einem Brennstoffzellenstapel dicht ab. Vorzugsweise ist das Versteifungselement zumindest abschnittsweise mit dem weichelastischen Material verbunden. Auf diese Weise kann das weichelastische Material Scherkräfte innerhalb des Stapels aufnehmen, ohne verzogen zu werden.

Eine vorteilhafte Ausbildung eines solchen Rahmens besteht darin, dass das Versteifungselement nicht allein an einer Seite an dem weichelastischen Material anliegt, sondern allseits von dem weichelastischen Material umgeben ist. Eine solcher Rahmen wird vorzugsweise durch Umspritzen des Versteifungselementes mit weichelastischem Material, wie z.B. Silikon oder temperaturbeständigen Gummis, wie etwa EPDM (Ethylen-Propylen-Dien-Kautschuk) oder FKM (Fluor-Polymer-Kautschuk), hergestellt. Zum einen ist ein solches Herstellungsverfahren kostengünstig, und zum anderen kann ein so gefertigter Rahmen mit Bipolarplatte wie ein einstückiges Bauteil gehandhabt werden. Das weichelastische Material gewährleistet zudem einen dichten Anschluss an die Kanäle in der Bipolarplatte.

Eine hohe mechanische Stabilität gegenüber einwirkenden Druckkräften und Verschiebungen wird insbesondere dann erreicht, wenn das Versteifungselement einstückig hergestellt ist und die Bipolarplatte umfänglich umschließt. Vorteilhaft werden die Versteifungselemente kostengünstig aus Blech, bevorzugt Edelstahl, gefertigt. So lassen sich diese Versteifungselemente etwa als Stanzteile oder über andere geeignete Verfahren in großer Stückzahl kostengünstig herstellen.

Um eine hohe Dichtigkeit insbesondere bei hohen Betriebsdrücken zu gewährleisten, werden die Versteifungselemente vorteilhaft im Bereich der Dichtungen angeordnet. Diese Dichtungen sind hierbei bevorzugt als umlaufende, in sich geschlossene Dichtwülste ausgebildet, sodass sie im Zusammenspiel mit den Versteifungselementen eine fluiddichte Abdichtung gegenüber dem Nachbarbauteil und somit eine dichte Führung der Reaktanden ermöglichen: Dabei sind die Dichtungen vorzugsweise auf lediglich einer Seite des Rahmens angeordnet. Die zwischen zwei Bipolarplatten eingespannte Elektrolytmembran erfährt hier im Wulstbereich einen derart erhöhten Anpressdruck, dass sie auf der wulstfreien Seite selbst dichtend wirkt.

Eine weitere vorteilhafte Ausbildung der Versteifungselemente besteht darin, dass sie Ausnehmungen aufweisen, sodass Befestigungsmittel durch die Rahmen geführt werden können. Da auf diese Weise die Bipolarplatten an ihrem versteiften Rahmenbereich in einen Brennstoffzellenstapel montiert werden, sind Dichtungen, Durchführungen und Zu- und Ableitungen besonders verrutschfest und dauerhaft stabil zueinander positioniert. Damit ist auf einfache und kostengünstige Weise eine mechanische Stabilisierung bei der Montage gewährleistet.

Ein weiterer Vorteil besteht darin, dass auf diese Weise eine besonders einfache Isolierung der Bipolarplatten gegenüber den Befestigungsmitteln z.B. Edelstahlschrauben gegeben ist. Dieses lässt sich im Produktionsprozess so umsetzen, dass das weichelastische Rahmenmaterial einen elektrischen Isolator bildet, und das Versteifungselement insbesondere an der Innenseite seiner Ausnehmungen vollständig bedeckt. Damit sind die Bipolarplatten ohne zusätzliche Produktionsschritte gegenüber den Befestigungsmitteln isoliert. Darüber hinaus weist eine so gestaltete Ausnehmung den Vorteil auf, dass die Ausnehmung aufgrund des weichelastischen Materials einen verringerten Durchmesser besitzt. Daher kann am Befestigungsmittel z.B. eine Schraube in der Ausnehmung der Bipolarplatte ohne weitere Hilfsmittel festgeklemmt werden. Auf diese Weise wird eine erleichterte Montage ohne zusätzliche Haltevorrichtungen unaufwändig gewährleistet.

Ein besonders sensibler Bereich für die Stabilität der Dichtungen ist der Einleitungsbereich der fluiden Reaktanden. Die Reaktanden werden üblicherweise durch Kanäle auf den elektrisch leitenden Bereich der Bipolarplatte geführt. Zur Reaktandenreinheit und wegen des Betriebsdruckes ist hier ein hinreichend hoher Anpressdruck auf die Dichtungen erforderlich. Dieser Druck kann allerdings nachteilig dazu führen, dass die Dichtungen die typischerweise wenige 10 µm dicke Elektrolytmembrane in die Fluidzu- oder -abführungskanäle drücken. Dies wird vorteilhaft gemäß der Erfindung durch einen Stützkörper vermieden, der auf der der Dichtung abgewandten Seite auf dem Rahmen der Bipolarplatte angeordnet ist. Dieser stützt die Elektrolytmembran gegenüber dem Andruck einer Dichtung der nächstliegenden Bipolarplatte ab. Dieser Stützkörper ist vorteilhaft als ein mit mindestens einem, vorzugsweise mehreren Stützfüßen versehenes flächiges Gebilde ausgebildet und mit seinen Stützfüßen im Bereich des Versteifungselementes auf dem Rahmen abgestützt. Auf diese Weise ist der Raum unter dem Stützkörper zugleich sowohl abgestützt als auch von außen mit Fluiden durchsetzbar. Der Stützkörper kann vorteilhaft einen u-förmigen Querschnitt aufweisen und sich mit seinen Schenkeln in dem Bereich des Versteifungselementes auf dem Rahmen abstützen. Vorteilhaft weisen die Schenkel Durchbrechungen auf, welche die Fluidführung in die Kanäle auf der Bipolarplatte ermöglichen. In einer weiteren vorteilhaften Ausführung ist der Stützkörper aus einem flächigen Gebilde mit einstückig durch Stanz- und Biegeverfahren ausgebildeten Stützbeinen gebildet.

Vorteilhaft wird der Stützkörper als separates Bauteil form- und kraftschlüssig auf der Bipolarplatte angebracht. Dabei weist der weichelastische Rahmen vorzugsweise hakenförmige Greifarme auf, die den Stützkörper auf der Bipolarplatte umgreifend fixieren. Auf diese Weise kann der Bipolarplattenrahmen kostengünstig etwa durch Umspritzen ohne zusätzliche Verfahrensschritte hergestellt werden, da keine Hohlräume während der Produktion aufwendig ab- und wieder aufgedeckt werden müssten. In alternativer vorteilhafter Ausführung weist der weichelastische Rahmen kleine Sacklöcher auf, in die der Stützkörper mittels an ihm befindlicher Stifte eingesteckt ist. Weisen die Stifte einen geringfügig größeren Durchmesser als die Sacklöcher auf, lassen sich die Stützkörper ohne hohen Kosten- und Fertigungssaufwand im weichelastischen Material des Rahmens durch einfaches Aufstecken fixieren, sodass ein zusammen mit Rahmen und Bipolarplatte einstückig handhabbares Bauteil entsteht.

Die Erfindung wird nachfolgend anhand eines in den Zeichnungen dargestellten Ausführungsbeispiels näher erläutert.

### Es zeigen:

- Fig. 1: einen stark vereinfachten und perspektivisch dargestellten Brennstoffzellenstapel,
- Fig. 2: eine schematische Draufsicht auf eine Bipolarplatte,
- Fig. 3: eine stark vereinfachte perspektivische Explosionsdarstellung des Brennstoffzellenstapels nach Fig. 1,
- Fig. 4: eine vergrößerte perspektivische Darstellung eines Teils des Bipolarplattenrahmens mit Versteifungselement im Schnitt,
- Fig. 5: eine stark vergrößerte perspektivische Darstellung des Aufbaus des Brennstoffzellenstapels.

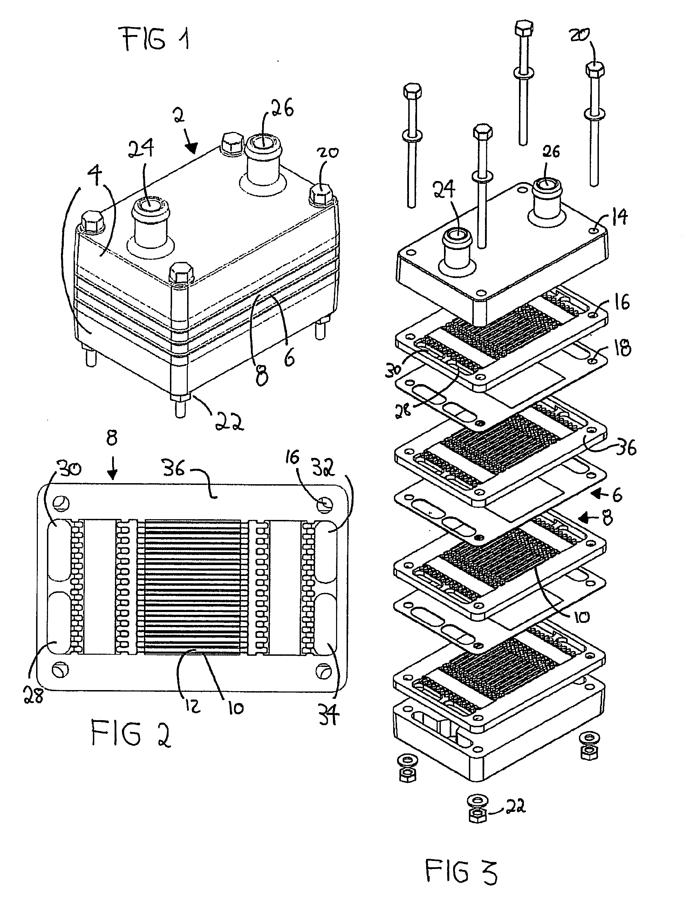

Ein anhand der Figuren 1 und 3 dargestellter Brennstoffzellenstapel 2 ist aufgebaut aus Endplatten 4 mit einem dazwischen angeordneten Stapel aus einer Vielzahl von, hier drei Brennstoffzellen 6. Jede Brennstoffzelle besteht aus einer Elektrolytmembran in Form einer Polymer-Elektrolyt-Membran (PEM) und einer Kathode und einer Anode. Die Elektroden sind jeweils auf einer Seite der Elektrolytmembran als dünne Schicht aufgebracht, sodass die Elektrolyt-Elektroden-Einheit eine wenige 10 µm dicke Folie darstellt. Diese Elektrolyt-Elektroden-Folie ist, wie an sich bekannt, in einem Kunststoffrahmen eingefasst und mit diesem abdichtend gegenüber benachbarten Stapelelementen montiert.

Die Brennstoffzellen 6 sind sowohl untereinander als auch mit den Endplatten 4 durch Baueinheiten 8 für Bipolarplatten 10 elektrisch miteinander verbunden. Eine solche Baueinheit 8 für eine Bipolarplatte 10 besteht im Wesentlichen aus einem elektrisch leitenden Blech 10, das beidseitig Kanäle 12 zur Reaktandenführung aufweist, sie kann jedoch auch aus anderem geeigneten Material bestehen, z. B. Kohlenstoff. Zur Montage in einem Brennstoffzellenstapel weisen sowohl die Endplatten 4 als auch die Baueinheiten 8 für die Bipolarplatten und Brennstoffzellen 6 jeweils vier im Randbereich befindliche Ausnehmungen 14, 16 und 18 auf, durch die vier Schrauben 20 von einer Seite durch den Brennstoffzellenstapel hindurch geführt sind. Auf der anderen Seite des Brennstoffzellenstapels sitzen Muttern 22 auf den Schrauben, sodass die Brennstoffzellen und Bipolarplatten zu einem Brennstoffzellenstapel zusammengeführt sind.

Darüber hinaus weist der Brennstoffzellenstapel Kanäle zur Durchleitung der Reaktandenfluide auf. Diese werden durch die Zu- und Ableitungen 24, 26 in den beiden Endplatten 4 ein- und ausgeleitet, die Durchleitung durch den Zellstapel erfolgt über die Ausnehmungen 28, 30, 32, 34 in den Rahmen der Brennstoffzellen und der Bipolarplatten, die im Folgenden als Durchbrechungen zur Unterscheidung von den Ausnehmungen für die Befestigungsmittel bezeichnet werden. Zur effizienten Reaktandenzufuhr entlang der Bipolarplatten sind die Durchbrechungen 28, 34 vorgesehen, welche die Fluide in Richtung quer zu den Bipolarplatten durch den Stapel führen, sodass diese stets mit über dem Stapel verteilt gleichem Druck parallel an allen Bipolarplatten anstehen. Bei dem anhand der Figuren beschriebenen Ausführungsbeispiel, welches einen zur Verbrennung von Wasserstoff bestimmten Brennstoffzellenstapel zeigt, erfolgt die Sauerstoffzufuhr mittels der Zuleitung 24 in der in Fig. 1 dargestellten oberen Endplatte in die in Fig. 2 links unten dargestellten Durchbrechungen 28, welche jeweils fluidleitend mit den in den Figuren 2 und 3 sichtbaren Oberseiten der Kanäle 12 in den Bipolarplatten 10 verbunden sind. Die Abfuhr erfolgt jeweils mittels der diagonal gegenüberliegenden Durchbrechung 32 über den durch die Ableitung 26 gebildeten Anschluss. Die Wasserstoffführung erfolgt in analoger Weise über die in der Fig. 1 nicht sichtbare untere Zu- und Ableitungen in der unteren Endplatte, und zwar vorzugsweise in entgegengerichteter Strömungsrichtung wie beim Sauerstoff. Es kann jedoch auch eine geeignete andere Strömungsführung gewählt werden, wenn dies, aus welchen Gründen auch immer, vorteilhaft oder zweckmäßig erscheinen sollte.

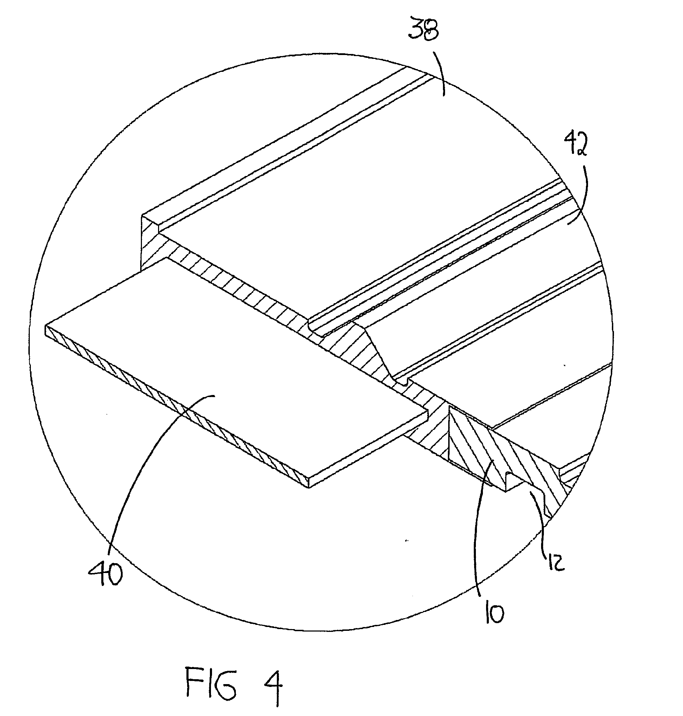

Die in Fig. 2 dargestellte Baueinheit für eine Bipolarplatte 8 ist aus einem gewellten Titanblech 10 aufgebaut, in welchem durch die Wellentäler auf jeder Seite Kanäle zur Durchleitung der Reaktandenfluide über die Elektroden der Brennstoffzellen gebildet sind. Anstelle eines elektrisch leitenden Bleches kann alternativ auch eine entsprechend geformte Platte aus einer Kohlenstoff-Kunststoff-Mischung eingebaut sein. Die Kanäle selbst können durch entsprechende Vertiefungen in der Bipolarplatte gebildet sein, sei es durch Formgebung beim Herstellungsprozess der Platte, z.B. Spritzguss oder durch Formgebung nach Herstellung der Platte, beispielsweise durch Fräsen, Erodieren oder Verformen. Die Bipolarplatte 10 ist in einem Rahmen 36 aus weichelastischem Material 38 eingefasst, der sich umfänglich um die gesamte Platte 8 erstreckt. Der Rahmen der Bipolarplatte 8 ist durch ein Versteifungselement 40 (Fig. 4) in Form eines aus Edelstahl gebildeten Blechabschnitts verstärkt, das eine große zentrale Durchbrechung zur Aufnahme der Bipolarplatte 10, Durchbrechungen für die Durchleitungen für die Reaktandenfluide 28, 30, 32, 34 und Ausnehmungen 16 zur Durchführung der Schrauben 20 aufweist. Dabei ist die Oberfläche des Versteifungselementes 40 allseits von dem weichelastischen Material 38 des Rahmens 36 bedeckt, welches in einem Spritzgießverfahren aufgebracht ist und die Kanalverbindungen zur Bipolarplatte 10 bildet. Das weichelastische Material 38 ist an einer Flachseite des Rahmens in seinem verstärkten Bereich als umlaufender Dichtwulst 42 ausgebildet. Das weichelastische Material 38 ist aus Silikon. Alternativ kann der Rahmen 36 auch durch Umspritzung des Versteifungselementes mit einem hitzebeständigen Gummi oder anderem geeigneten weichelastischen Material ausgebildet sein. Somit ist das Versteifungselement 40 allseitig von weichelastischen Rahmenmaterial umgeben. Das weichelastische Material umfasst den Randbereich der Bipolarplatte 10 von Vor- und Rückseite.

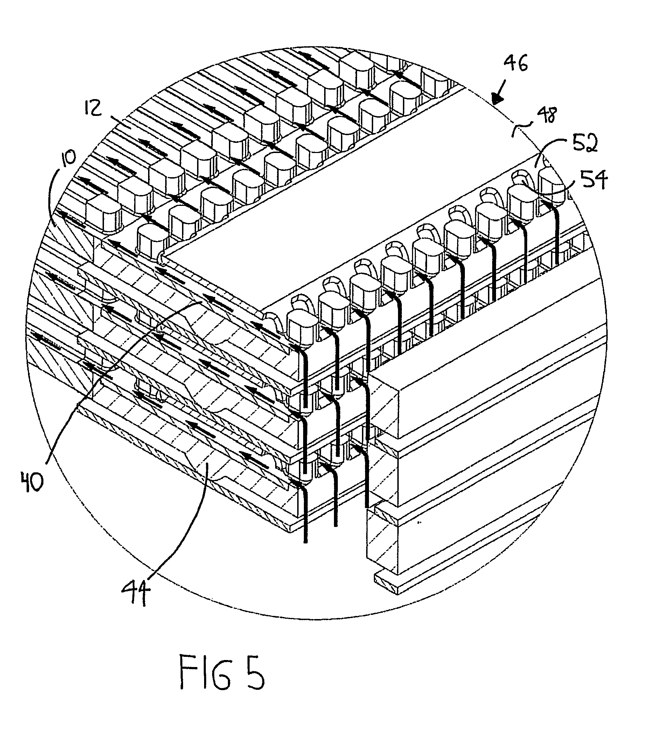

Auf der in Fig. 2 vom Beobachter abgewandten Seite befindet sich am Rahmen ein sowohl die Bipolarplatte 10 als auch die Durchbrechungen für die Reaktandendurchleitungen einschließender umfänglich umlaufender Dichtwulst 42. Die durch die Durchbrechungen 28, 30, 32, 34 im Rahmen geleiteten Reaktanden, z.B. Wasserstoff und Sauerstoff treten durch kleine Kanalführungen an der Oberfläche des Bipolarplattenrahmens und gelangen so zu den in der Bipolarplatte 10 ausgebildeten Kanälen 12. Um eine Durchmischung der Reaktandenfluide zu vermeiden, weist der Rahmen jeweils um die Durchbrechungen einen umlaufenden Dichtwulst 44 auf, wie in Fig. 5 dargestellt. Diese, die Durchbrechungen umfassenden Dichtwülste 44 münden in dem außen umlaufenden Dichtwulst 42, der diese fortsetzt. Die Dichtwülste werden durch das Versteifungselement 40 im Rahmen unterstützt.

Auf der diesem Dichtwulst 44 abgewandten Seite des Rahmens ist ein Stützkörper 46 angeordnet, der einen u-förmigen Querschnitt aufweist. Der rahmenparallele Steg 48 ist quer zu den Kanalrichtungen der Bipolarplatte 10 angeordnet und ist mit Abstand über dem Versteifungselement 40 im Rahmen angeordnet. Dort erstreckt sich der Stützkörper 46 über die Breite der Durchbrechung zur Reaktandenzuführung. Die Schenkel 52 des Stützkörpers 46 sind fluchtend zu den Kanälen der Bipolarplatte 10 durchbrochen. Durch die Durchbrechungen 54 in den Schenkeln 52 des Stützkörpers 46 gelangt das Reaktandenfluid zu den Kanälen der Bipolarplatte 10. Wie aus Fig. 5 ersichtlich ist, verhindert der Stützkörper 46, dass der Rahmen der Elektrolytmembran durch den Dichtwulst 44 in die Fluidführungskanäle gedrückt wird. Der Stützkörper 46 ist dabei über Klemmmittel, die aus dem weichelastischem Rahmenmaterial hakenartig ausgreifend ausgebildet sind, form- und kraftschlüssig gehalten (nicht dargestellt).

Die erfindungsgemäße Lösung ist nicht nur wie vorstehend beschrieben, für Brennstoffzellen, sondern auch für Stapel aus Elektrolyseuren anwendbar. Die erfindungsgemäße Ausbildung ist nicht nur für Wasserstoffbrennstoffzellen, sondern für beliebige Brennstoffzellen bzw. Elektrolyseure der PEM-Bauart bestimmt und geeignet.

### Bezugszeichenliste

- 2 -: Brennstoffzellenstapel
- 4 -: Endplatten
- 6 -: Brennstoffzellen
- 8 -: Baueinheit für Bipolarplatte
- 10 -: Bipolarplatte
- 12 -: Kanäle Bipolarplatte
- 14 -: Ausnehmung in Endplatte
- 16 -: Ausnehmung in Bipolarplatte
- 18 -: Ausnehmung in Brennstoffzelle
- 20 -: Schraube
- 22 -: Mutter
- 24 -: Reaktandenzuleitung
- 26 -: Reaktandenableitung
- 28 -: zuleitende Reaktandendurchleitung
- 30 -: ableitende Reaktandendurchleitung
- 32 -: ableitende Reaktandendurchleitung
- 34 -: zuleitende Reaktandendurchleitung
- 36 -: Rahmen der Bipolarplatte
- 38 -: weichelastisches Rahmenmaterial
- 40 -: Versteifungselement
- 42, 44 -: Dichtwulst
- 46 -: Stützkörper
- 48 -: Steg des Stützkörpers
- 52 -: Schenkel des Stützkörpers
- 54 -: Durchbrechungen des Stützkörpers

## Patentansprüche

1. Bipolarplatte für einen Stapel (2) mit mindestens einer Brennstoffzelle (6) oder Elektrolyseurzelle der PEM-Bauart, welche von einem Rahmen (36) umgeben ist, der mindestens eine Dichtung (42) bildet, **dadurch gekennzeichnet, dass** der Rahmen (36) aus einem durch mindestens ein Versteifungselement (40) verstärkten weichelastischen Werkstoff (38) gebildet ist.

2. Bipolarplatte nach Anspruch 1, **dadurch gekennzeichnet, dass** das Versteifungselement (40) auf mindestens einer Seite mit dem weichelastischen Material (38) des Rahmens (36) versehen ist.

3. Bipolarplatte nach einem der vorhergehenden Ansprüche, **dadurch gekennzeichnet, dass** das weichelastischen Material (38) zumindest abschnittsweise fest mit dem Versteifungselement (40) verbunden ist.

4. Bipolarplatte nach Anspruch 1, **dadurch gekennzeichnet, dass** das Versteifungselement (40) vorzugsweise einstückig die Bipolarplatte (10) umschließend allseits vom dem weichelastischen Material (38) umschlossen ist.

5. Bipolarplatte nach einem der vorhergehenden Ansprüche, **dadurch gekennzeichnet, dass** die Versteifungselemente (40) aus Blech, *bevorzugt Edelstahl*, gefertigt sind.

6. Bipolarplatte nach einem der vorhergehenden Ansprüche, **dadurch gekennzeichnet, dass** die Dichtung (42) als umlaufender Dichtwulst (42, 44) ausgebildet ist und das Versteifungselement (40) mindestens im Bereich des Dichtwulstes (42, 44) angeordnet ist.

7. Bipolarplatte nach einem der vorhergehenden Ansprüche, **dadurch gekennzeichnet, dass** das Versteifungselement (40) mindestens eine Ausnehmung (16) aufweist.

8. Bipolarplatte nach einem der vorhergehenden Ansprüche, **dadurch gekennzeichnet, dass** das weichelastische Rahmenmaterial (38) als elektrischer Isolator ausgebildet ist und das Versteifungselement (40) an der Innenseite seiner mindestens einen Ausnehmung (16) von einem elektrisch Rahmenmaterial (38) vollständig isolierend bedeckt ist.

9. Bipolarplatte nach einem der vorhergehenden Ansprüche, **dadurch gekennzeichnet, dass** auf einer Rahmenseite mindestens ein Stützkörper (46) angeordnet ist, der sich flächig parallel zum Rahmen erstreckt und mindestens einen Stützfuß (52) aufweist, der sich am Rahmen im Bereich des Versteifungselementes (40) abstützt und einen Bereich überdeckt, der Kanäle zur Fluiddurchführung aufweist.

10. Bipolarplatte nach Anspruch 9, **dadurch gekennzeichnet, dass** der Stützkörper (46) auf der von der Dichtung (44) abgewandten Rahmenseite angeordnet ist.

11. Bipolarplatte nach Anspruch 9 oder 10, **dadurch gekennzeichnet, dass** der Stützkörper (46) über einstückig mit dem elastischen Rahmenmaterial (38) ausgebildete Klemmmittel auf dem Rahmenelement angeordnet ist.

12. Bipolarplatte nach einem der Ansprüche 9-11, **dadurch gekennzeichnet, dass** Stützkörper (46) und Dichtung (44) im Bereich mindestens einer Ausnehmung zur Zu- oder Ableitung mindestens eines Reaktanden angeordnet sind.
